# EUROPEAN PATENT SPECIFICATION

(11) **EP 3 809 559 B1**
(45) Date of publication and mention of the grant of the patent: **03.08.2022**
(21) Application number: 19202959.3
(22) Date of filing: 14.10.2019
(51) Int. Cl.: H02J 50/90

(54) **METHOD FOR GENERATING WIRELESS CHARGING ALIGNMENT LINE ON A MOBILE PHONE**
VERFAHREN ZUM ERZEUGEN EINER DRAHTLOSEN LADEAUSRICHTUNGSLEITUNG AN EINEM MOBILTELEFON
PROCÉDÉ DE GÉNÉRATION DE LIGNE D'ALIGNEMENT DE CHARGE SANS FIL SUR UN TÉLÉPHONE MOBILE

(43) Date of publication of application: 21.04.2021
(73) Proprietor: Lin, Yi Sheng, New Taipei City (TW)
(72) Inventor: Lin, Yi Sheng, New Taipei City (TW)
(74) Representative: Gee, Steven William

(56) References cited:
- WO-A1-2019/195703
- CN-A- 109 462 286
- US-A1- 2014 168 012

## Description

### BACKGROUND OF THE INVENTION

### 1. Field of the Invention

The technical field generally relates to charging a mobile phone, and in particular, to generating an alignment line on a mobile phone screen to facilitate accurate placement on a wireless charging device to obtain an optimal charging effect.

### 2. The Prior Arts

Wireless charging technology is to supply power by non-physical contact. As the technology matures, it is more and more popular. Various types of electronic mobile devices, such as mobile phones and tablet computers, adopt this charging technology. However, to improve the wireless charging efficiency, the charging position of the electronic device and the wireless charger must be accurately aligned when charging. To this end, the inventor has previously devised an alignment method for a mobile phone and a wireless charging device, wherein the wireless charging device is provided with a corresponding symbol on the surface on which the mobile phone is placed, and then the application in the mobile phone is activated and operated. An alignment line is generated on the screen, and the alignment line must be aligned with the corresponding symbol during placing the mobile phone on the wireless charging device, so that the mobile phone can be located at the optimal charging position on the wireless charging device, thereby to obtain the best charging efficiency from the process.

In the above method, how does the application generate the alignment line on the screen of the mobile phone? In addition to the information provided by the mobile phone manufacturer, the manufacturer must continuously experiment and test. To simplify the operation, the inventor has devised a method of generating a wireless charging alignment line on a mobile phone.

WO 2019/195703 discloses a system and method for wireless charging of a mobile phone, the mobile phone having an application which generates a wireless charging alignment line on the mobile phone which is used to align the mobile phone with a wireless charging device.

### SUMMARY OF THE INVENTION

The primary object of the present invention is to provide a method for generating a wireless charging alignment line on a mobile phone, which mainly uses an application installed in a mobile phone and in combination with moving the mobile phone on a wireless charging device, and utilizes the sensing state of the wireless charging coil in the mobile phone and the wireless charging coil in the wireless charging device to define a plurality of marking lines at different positions, and then obtains the intermediate position of all the marking lines to display on the screen, which is the alignment line of the best charging position for the mobile phone.

To achieve the above object, the present invention provides a method for generating a wireless charging alignment line on a mobile phone, comprising: starting an application in the mobile phone and generating an operation screen, and placing the mobile phone on a wireless charging device, at least one corresponding symbol being disposed on the wireless charging device;
characterised in that the wireless charging device has two clamping arms, the at least one corresponding symbol being disposed on the clamping arms, and the mobile phone being placed between the clamping arms;
the method further comprising: moving the mobile phone according to indication of the operation screen, and generating a first unchargeable line on the operation screen;
moving the mobile phone according to the indication on the operation screen, and generating a first preferred charging line corresponding to a predetermined charging efficiency on the operation screen;
moving the mobile phone according to the indication of the operation screen, and generating a second unchargeable line on the operation screen, using center of the mobile phone as a center, the first unchargeable line and the second unchargeable line being located on opposite sides of the center;
moving the mobile phone according to the indication of the operation screen, and generating a second preferred charging line corresponding to a predetermined charging efficiency on the operation screen, using center of the mobile phone as a center, the first preferred charging line and the second preferred charging line being located on opposite sides of the center;
the application calculating a median value according to the positions of the first unchargeable line, the first preferred charging line, the second unchargeable line, and the second preferred charging line, and displaying the alignment line on the operation screen according to the median value.

In a preferred embodiment, the indication of the operation screen is by at least one of displaying an arrow, displaying a text, or a voice prompt.

In a preferred embodiment, when the application is started, an initial line appears on the operation screen; and during placing the mobile phone on the wireless charging device, the initial line is aligned to the corresponding symbol.

In a preferred embodiment, the step of defining the first unchargeable line, the first preferred charging line, the second unchargeable line, and the second preferred charging line on the operation screen is to move first the mobile phone according to the indication of the operation screen, and stop moving when a predetermined display signal appears on the operation screen; then, use a finger to touch to move a movable line in the operation screen, and stop moving when the movable line is aligned with the corresponding symbol; then, use a finger to touch a confirmation box displayed on the operation screen to cause the application to generate the first unchargeable line to appearing on the operation screen; similarly, the first preferred charging line, the second unchargeable line, and the second preferred charging line are generated in the same manner.

In a preferred embodiment, the application can synchronously connect to a cloud server database, and synchronously update the cloud server database with obtained alignment data of the mobile phone.

The present invention has the following specific effects:
1. The application installed on the mobile phone can quickly and conveniently generate an alignment line on the mobile phone with simple operation;
2. The application can synchronously connect to the cloud server database and update the data synchronously. Therefore, after updating once, the user can connect to the cloud server database, and the position of the most accurate alignment line can be obtained synchronously.

The foregoing will become better understood from a careful reading of a detailed description provided herein below with appropriate reference to the accompanying drawings.

### BRIEF DESCRIPTION OF THE DRAWINGS

The embodiments can be understood in more detail by reading the subsequent detailed description in conjunction with the examples and references made to the accompanying drawings, wherein:
FIG. 1 is a flowchart of a method for generating a wireless charging alignment line on a mobile phone according to the present invention;
FIG. 2 is a schematic view of a mobile phone and a wireless charging device used in conjunction with the method of the present invention;
FIG. 3 is a schematic view of displaying an initial line on a mobile phone by the method for generating a wireless charging alignment line on a mobile phone of the present invention;
FIG. 4A is a schematic view (1) showing an operation screen on a mobile phone according to the method of the present invention;
FIG. 4B is a schematic view showing a first unchargeable line on the operation screen according to the method of the present invention;
FIG. 5A is a schematic view (2) showing an operation screen on the mobile phone according to the method of the present invention;
FIG. 5B is a schematic view showing a first preferred charging line on the operation screen according to the method of the present invention;
FIG. 6A is a schematic view (3) showing an operation screen on the mobile phone according to the method of the present invention;
FIG. 6B is a schematic view showing a second unchargeable line on the operation screen according to the method of the present invention;
FIG. 7A is a schematic view (4) showing an operation screen on the mobile phone according to the method of the present invention;
FIG. 7B is a schematic view showing a second preferred charging line on the operation screen according to the method of the present invention;
FIG. 8 is a schematic view showing an alignment line on the operation screen in conjunction with the method of the present invention.

### DETAILED DESCRIPTION OF THE DISCLOSED EMBODIMENTS

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

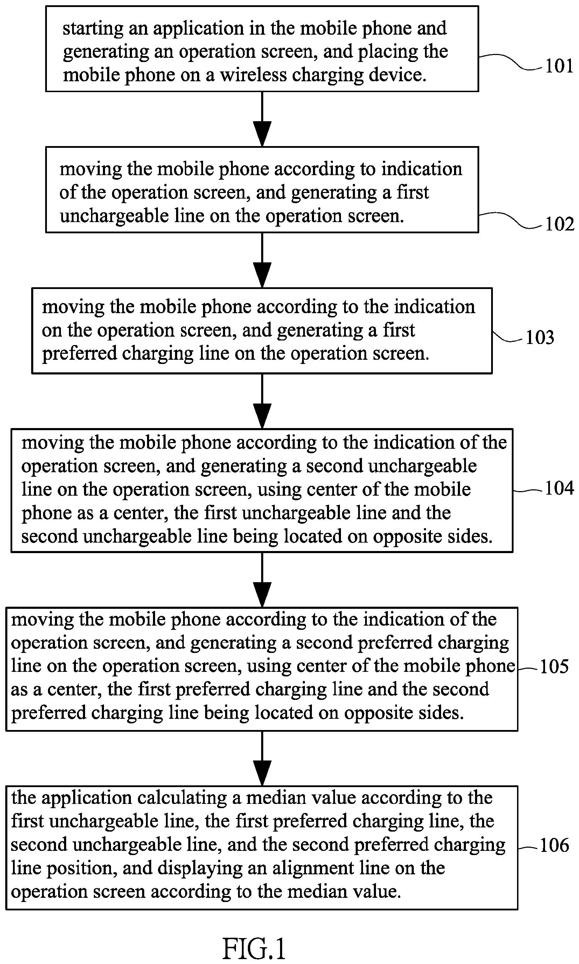

FIG. 1 is a flowchart of a method for generating a wireless charging alignment line on a mobile phone according to the present invention. The method comprises:
Step 101: starting an application in the mobile phone and generating an operation screen, and placing the mobile phone on a wireless charging device;
Step 102: moving the mobile phone according to indication of the operation screen, and generating a first unchargeable line on the operation screen;
Step 103: moving the mobile phone according to the indication on the operation screen, and generating a first preferred charging line on the operation screen;
Step 104: moving the mobile phone according to the indication of the operation screen, and generating a second unchargeable line on the operation screen, using center of the mobile phone as a center, the first unchargeable line and the second unchargeable line being located on opposite sides of the center;
Step 105: moving the mobile phone according to the indication of the operation screen, and generating a second preferred charging line on the operation screen, using center of the mobile phone as a center, the first preferred charging line and the second preferred charging line being located on opposite sides of the center;
Step 106: the application calculating a median value according to the positions of the first unchargeable line, the first preferred charging line, the second unchargeable line, and the second preferred charging line, and displaying an alignment line on the operation screen according to the median value.

As such, when the mobile phone is placed in the wireless charging device, the mobile phone can quickly complete the alignment operation with the wireless charging device, and maintain better charging performance in the subsequent wireless charging process.

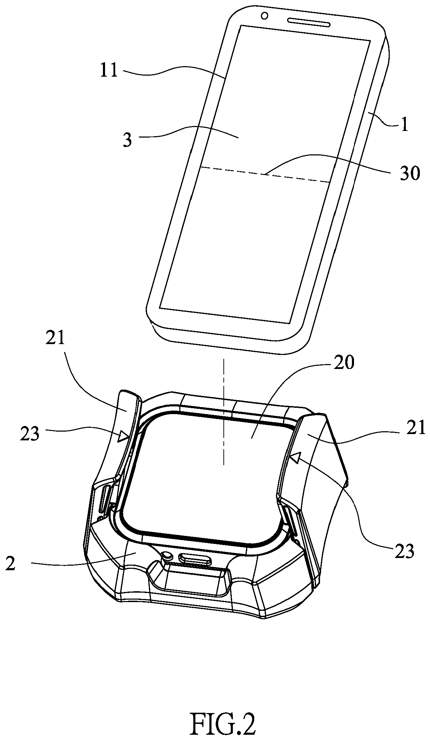

As shown in FIG. 2, a schematic view of a mobile phone and a wireless charging device used in conjunction with the method of the present invention, the mobile phone 1 has a display screen 11. The mobile phone 1 is installed with an application and displays an operation screen 3 on the display screen 11. The wireless charging device 2 comprises a placement surface 20 and two clamping arms 21 for holding the mobile phone 1. The two clamping arms 21 can be pulled and moved closer to or away from each other. The wireless charging device 2 has a wireless charging module, and the wireless charging module uses wireless charging technology, which will not be described in detail herein. The wireless charging device 2 is further disposed with at least one corresponding symbol 23, and the corresponding symbol 23 is located in the charging working area of the wireless charging module. In the present embodiment, the position between two corresponding symbols 23 is the optimal charging location. Further, in the present embodiment, the corresponding symbol 23 is located on the surface of the clamping arm 21.

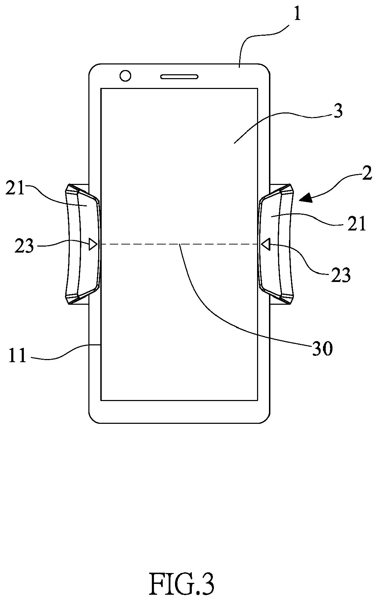

Then, the following operation figures and the above steps are described in detail. In the subsequent steps, the wireless charging device 2 is fixed and does not move:
As shown in FIG. 3, in step 101, when the application is launched, an initial line 30 appears on the operation screen 3. The position of the initial line 30 may be at the middle of the operation screen 3, or the data recorded by previously using the application, or a preset position. The initial line 30 is only for the user to place the mobile phone 1 on the wireless charging device 2, and the middle position of the mobile phone 1 is close to the corresponding symbol 23 for the purpose of activating the wireless charging process between the mobile phone 1 and the wireless charging device 2.

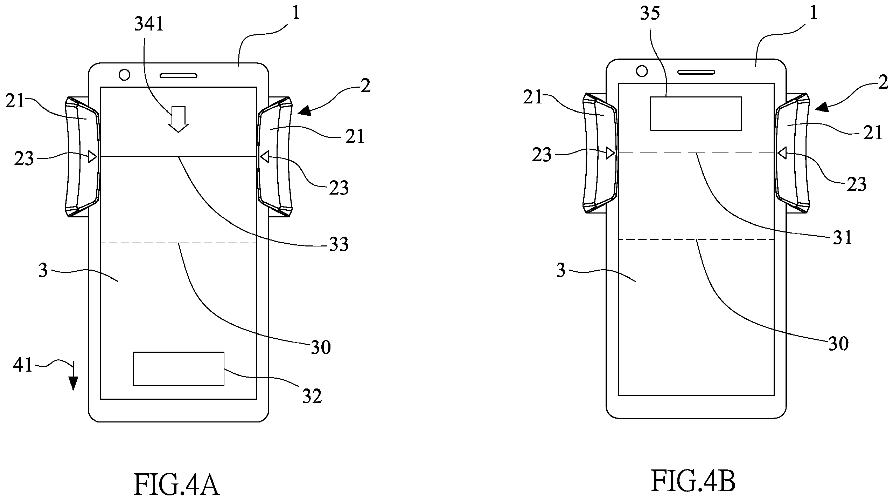

As shown in FIG. 4A and FIG. 4B, step 102 defines the first unchargeable line 31 on the operation screen 3. As shown in FIG. 4A, the step further comprises: the operation screen 3 indicating to move the mobile phone 1 in a first direction 41, and stop the movement when a display signal 32, such as suspending charging or failure to charge, appears on the operation screen 3. Then, the user uses a finger to touch to move a movable line 33 on the operation screen 3, and stops the movement when the movable line 33 is aligned with the corresponding symbol 23. In the present embodiment, the indication of the operation screen 3 can be displayed in at least one of: an arrow, a text, or a voice prompt. As shown, a downward arrow 341 is displayed. The first direction 41 is toward the lower edge of the mobile phone 1, that is, in the downward direction of the figure. As shown in FIG. 4B, after the movable line 33 is at the correct position, the user touches a confirmation box 35 displayed on the operation screen 3 with a finger, and the application displays the first unchargeable line 31 on the operation screen 3 (as the uppermost dash line shown in the figure). Herein, the position represents a position where the wireless charging device 2 cannot perform charging on the mobile phone 1.

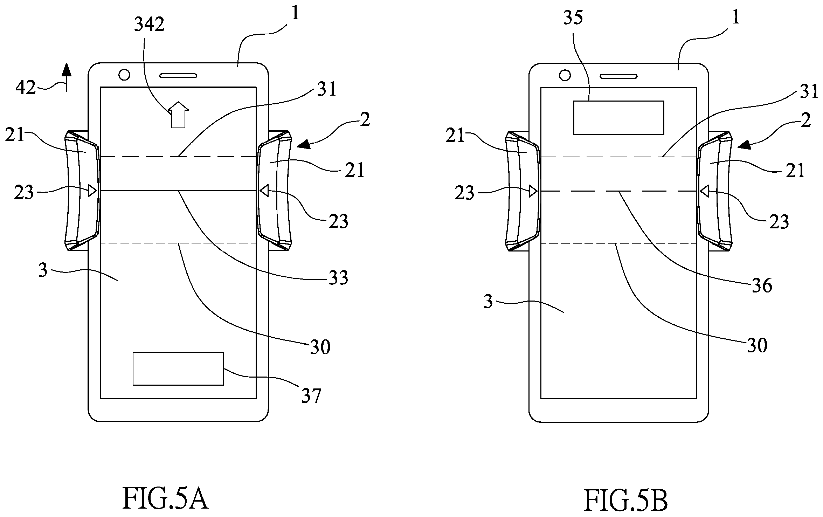

As shown in FIG. 5A and FIG. 5B, step 103 defines the first preferred charging line 36 on the operation screen 3. As shown in FIG. 5A, the step further comprises: the operation screen 3 indicating to move the mobile phone 1 in a second direction 42, and stop the movement when a display signal 37 indicates a predetermined charging efficiency appearing on the operation screen 3. Then, the user uses a finger to touch to move a movable line 33 on the operation screen 3, and stops the movement when the movable line 33 is aligned with the corresponding symbol 23. In the present embodiment, the second direction 42 is toward the upper edge of the mobile phone 1, that is, in the upward direction of the figure. Correspondingly, the indication of the operation screen 3 is an upward arrow 342. The display signal 37 displays the charging efficiency is 25%, but not limited to the specific number. As shown in FIG. 5B, after the movable line 33 is at the correct position, the user touches a confirmation box 35 displayed on the operation screen 3 with a finger, and the application displays the first preferred charging line 36 on the operation screen 3.

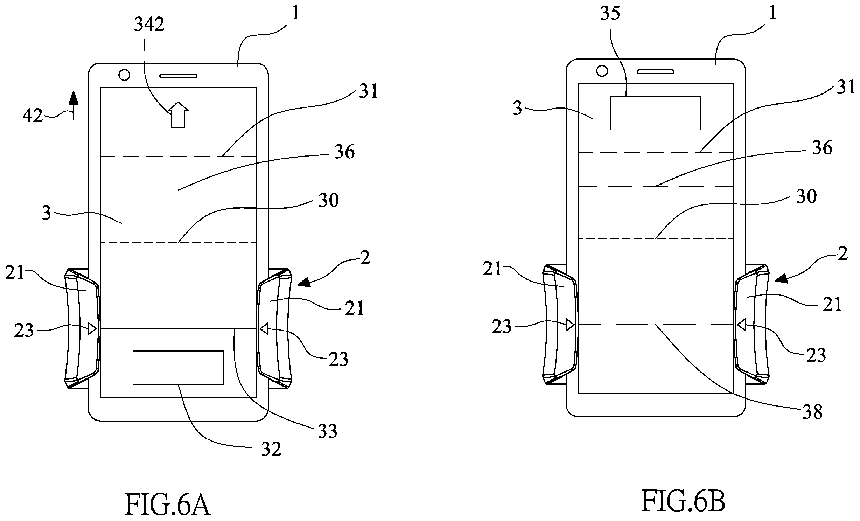

As shown in FIG. 6A and FIG. 6B, step 104 defines the second unchargeable line 38 on the operation screen 3. As shown in FIG. 6A, the step further comprises: the operation screen 3 indicates to move the mobile phone 1 in the second direction 42, and stop the movement when a display signal 32, such as suspending charging or failure to charge, appearing on the operation screen 3. Then, the user uses a finger to touch to move a movable line 33 on the operation screen 3, and stops the movement when the movable line 33 is aligned with the corresponding symbol 23. As shown in FIG. 6B, after the movable line 33 is at the correct position, the user touches a confirmation box 35 displayed on the operation screen 3 with a finger, and the application displays the second unchargeable line 38 on the operation screen 3. Herein, the position represents the lowest position where the wireless charging device 2 cannot perform charging on the mobile phone 1.

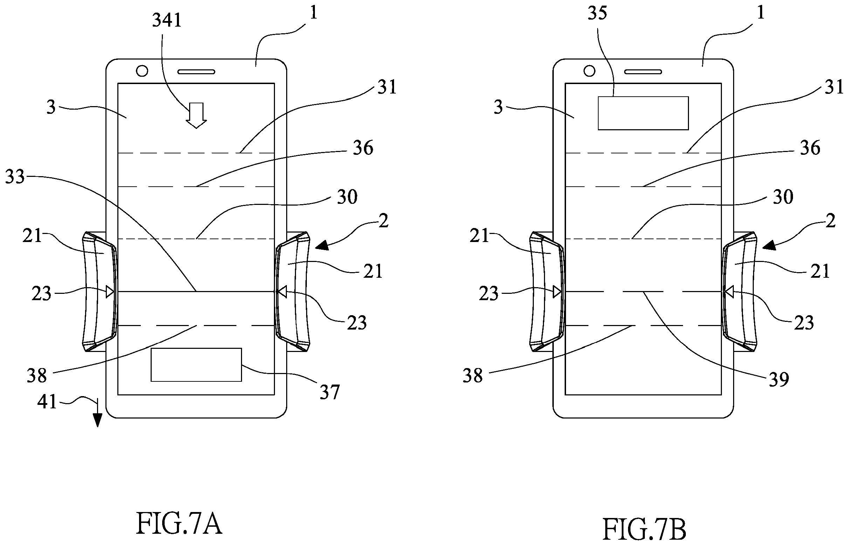

As shown in FIG. 7A and FIG. 7B, step 105 defines the second preferred charging line 39 on the operation screen 3. As shown in FIG. 7A, the step further comprises: the operation screen 3 indicating to move the mobile phone 1 in the first direction 41, and stop the movement when a display signal 37 indicates a predetermined charging efficiency appearing on the operation screen 3. Then, the user uses a finger to touch to move a movable line 33 on the operation screen 3, and stops the movement when the movable line 33 is aligned with the corresponding symbol 23. In the present embodiment, the display signal 37 displays the charging efficiency is 25%, but not limited to the specific number. As shown in FIG. 7B, after the movable line 33 is at the correct position, the user touches a confirmation box 35 displayed on the operation screen 3 with a finger, and the application displays the second preferred charging line 39 on the operation screen 3

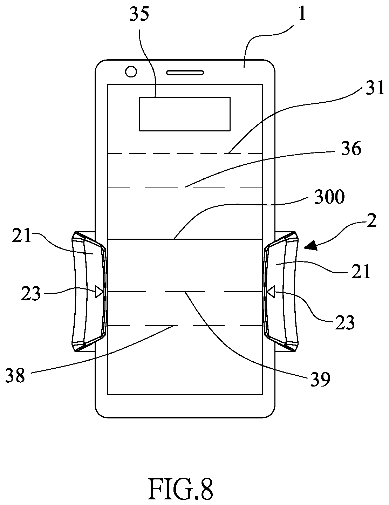

As shown in FIG. 8, in step 106, after the calculation of the application, an alignment line 300 is displayed on the operation screen 3. This alignment line 300 is the optimal charging position of the mobile phone 1.

When the user wants to perform a wireless charging operation in the future, when the charging mode of the application is activated, the alignment line 300 is displayed on the operation screen 3, and the user only needs to place the mobile phone 1 on the wireless charging device 2, with the alignment line 300 aligned with the corresponding symbol 23 on the wireless charging device 2, which means that the mobile phone 1 is accurately placed on the wireless charging device 2 and charged at an optimum charging efficiency.

In addition, the application of the present invention can be connected to a cloud server database. After obtaining the alignment line 300 of the new mobile phone according to the present invention, the application synchronously updates the cloud server database, and subsequently the users only need to connect to the cloud server to obtain the most accurate alignment line 300 from the cloud server synchronously.

It will be apparent to those skilled in the art that various modifications and variations can be made to the disclosed embodiments. It is intended that the specification and examples be considered as exemplary only, with a true scope of the disclosure being indicated by the following claims.

## Claims

1. A method for generating a wireless charging alignment line (300) on a mobile phone (1), comprising:
starting an application in the mobile phone and generating an operation screen (3), and placing the mobile phone on a wireless charging device (2), at least one corresponding symbol (23) being disposed on the wireless charging device;
**characterised in that** the wireless charging device has two clamping arms (21), the at least one corresponding symbol (23) being disposed on the clamping arms (21), and the mobile phone being placed between the clamping arms;
the method further comprising:
moving the mobile phone according to indication (341) of the operation screen (3), and generating a first unchargeable line (31) on the operation screen;
moving the mobile phone according to the indication (342) on the operation screen (3), and generating a first preferred charging line (36) corresponding to a predetermined charging efficiency on the operation screen;
moving the mobile phone according to the indication (342) of the operation screen (3), and generating a second unchargeable line (38) on the operation screen, using center of the mobile phone as a center, the first unchargeable line and the second unchargeable line being located on opposite sides of the center;
moving the mobile phone according to the indication (341) of the operation screen (3), and generating a second preferred charging line (39) corresponding to a predetermined charging efficiency on the operation screen, using center of the mobile phone as a center, the first preferred charging line and the second preferred charging line being located on opposite sides of the center;
the application calculating a median value according to the positions of the first unchargeable line (31), the first preferred charging line (36), the second unchargeable line (38), and the second preferred charging line (39), and displaying the alignment line (300) on the operation screen (3) according to the median value.

2. The method for generating a wireless charging alignment line (300) on a mobile phone (1) as claimed in claim 1, wherein the indication of the operation screen is by at least one of displaying an arrow (341, 342), displaying a text, or a voice prompt.

3. The method for generating a wireless charging alignment line (300) on a mobile phone (1) as claimed in claim 1, wherein when the application is started, an initial line (30) appears on the operation screen (3); and during placing the mobile phone in the wireless charging device, the initial line (30) is aligned to the corresponding symbol (23).

4. The method for generating a wireless charging alignment line (300) on a mobile phone (1) as claimed in claim 3, wherein the position of the initial line (30) is at the middle of the operation screen (3), or determined by data recorded by previously using the application, or a preset position.

5. The method for generating a wireless charging alignment line (300) on a mobile phone (1) as claimed in claim 3, wherein the step of defining the first unchargeable line (31) on the operation screen (3) comprises: first moving the mobile phone in a first direction (41) according to the indication (341) of the operation screen, and stopping moving when a display signal showing suspending charging or failure to charge appears on the operation screen; using a finger to touch to move a movable line (33) on the operation screen, and stopping moving when the movable line is aligned with the corresponding symbol (23); then, using a finger to touch a confirmation box (35) displayed on the operation screen to cause the application to generate the first unchargeable line (31) to appear on the operation screen (3).

6. The method for generating a wireless charging alignment line (300) on a mobile phone (1) as claimed in claim 5, wherein the step of defining the first preferred charging line (36) on the operation screen comprises: first moving the mobile phone in a second direction (42) according to the indication (342) of the operation screen, the second direction being opposite to the first direction, and stopping moving when a display signal showing predetermined charging efficiency appears on the operation screen; using a finger to touch to move a movable line (33) on the operation screen, and stopping moving when the movable line is aligned with the corresponding symbol (23); then, using a finger to touch a confirmation box (35) displayed on the operation screen to cause the application to generate the first preferred charging line (36) to appear on the operation screen (3).

7. The method for generating a wireless charging alignment line (300) on a mobile phone (1) as claimed in claim 6, wherein the step of defining the second unchargeable line (38) on the operation screen comprises: first moving the mobile phone in the second direction (42) according to the indication (342) of the operation screen, and stopping moving when a display signal showing suspending charging or failure to charge appears on the operation screen; using a finger to touch to move a movable line (33) on the operation screen, and stopping moving when the movable line is aligned with the corresponding symbol (23); then, using a finger to touch a confirmation box (35) displayed on the operation screen to cause the application to generate the second unchargeable line (38) to appear on the operation screen (3).

8. The method for generating a wireless charging alignment line (300) on a mobile phone (1) as claimed in claim 7, wherein the step of defining the second preferred charging line (39) on the operation screen comprises: first moving the mobile phone in the first direction (41) according to the indication (341) of the operation screen, and stopping moving when a display signal showing predetermined charging efficiency appears on the operation screen; using a finger to touch to move a movable line (33) on the operation screen, and stopping moving when the movable line is aligned with the corresponding symbol (23); then, using a finger to touch a confirmation box (35) displayed on the operation screen to cause the application to generate the second preferred charging line (39) to appear on the operation screen (3).

9. The method for generating a wireless charging alignment line (300) on a mobile phone (1) as claimed in claim 1, wherein the application can synchronously connect to a cloud server database, and synchronously update the cloud server database with obtained alignment data of the mobile phone.

## Patentansprüche

1. Ein Verfahren zum Erzeugen einer drahtlosen Ladeausrichtungsleitung (300) auf einem Mobiltelefon (1), das Folgendes umfasst:
Starten einer Anwendung im Mobiltelefon und Erzeugen eines Betriebsbildschirms (3), und Auflegen des Mobiltelefons auf eine drahtlose Ladevorrichtung (2), wobei mindestens ein entsprechendes Symbol (23) auf der drahtlosen Ladevorrichtung angeordnet ist;
**dadurch gekennzeichnet, dass** die drahtlose Ladevorrichtung zwei Klemmarme (21) aufweist, wobei das mindestens eine entsprechende Symbol (23) an den Klemmarmen (21) angeordnet ist und das Mobiltelefon zwischen den Klemmarmen gestellt wird;
das Verfahren umfasst ferner:
Bewegen des Mobiltelefons gemäß der Anzeige (341) des Betriebsbildschirms (3) und Erzeugen einer ersten nicht aufladbaren Leitung (31) auf dem Betriebsbildschirm;
Bewegen des Mobiltelefons gemäß der Anzeige (342) auf dem Betriebsbildschirm (3) und Erzeugen einer ersten bevorzugten Ladeleitung (36), die einer vorbestimmten Ladeeffizienz auf dem Betriebsbildschirm entspricht;
Bewegen des Mobiltelefons entsprechend der Anzeige (342) des Betriebsbildschirms (3) und Erzeugen einer zweiten nicht aufladbaren Leitung (38) auf dem Betriebsbildschirm unter Verwendung der Mitte des Mobiltelefons als Zentrum, wobei die erste nicht aufladbare Leitung und die zweite nicht aufladbare Leitung auf gegenüberliegenden Seiten des Zentrums angeordnet sind;
Bewegen des Mobiltelefons entsprechend der Anzeige (341) des Betriebsbildschirms (3) und Erzeugen einer zweiten bevorzugten Ladeleitung (39), die einer vorbestimmten Ladeeffizienz auf dem Betriebsbildschirm entspricht, unter Verwendung der Mitte des Mobiltelefons als Zentrum, wobei die erste bevorzugte Ladeleitung und die zweite bevorzugte Ladeleitung auf gegenüberliegenden Seiten des Zentrums angeordnet sind;
die Anwendung einen Medianwert gemäß den Positionen der ersten nicht aufladbaren Leitung (31), der ersten bevorzugten Ladeleitung (36), der zweiten nicht aufladbaren Leitung (38) und der zweiten bevorzugten Ladeleitung (39) berechnet und die Ausrichtungsleitung (300) auf dem Betriebsbildschirm (3) gemäß dem Medianwert anzeigt.

2. Verfahren zum Erzeugen einer drahtlosen Ladeausrichtungsleitung (300) auf einem Mobiltelefon (1) nach Anspruch 1, wobei die Anzeige des Betriebsbildschirms durch mindestens eines der folgenden Mittel erfolgt: Anzeigen eines Pfeils (341, 342), Anzeigen eines Textes oder eine Sprachansage.

3. Verfahren zum Erzeugen einer drahtlosen Ladeausrichtungsleitung (300) auf einem Mobiltelefon (1) nach Anspruch 1, wobei beim Starten der Anwendung eine Anfangsleitung (30) auf dem Betriebsbildschirm (3) erscheint; und beim Einsetzen des Mobiltelefons in die drahtlose Ladevorrichtung die Anfangsleitung (30) auf das entsprechende Symbol (23) ausgerichtet wird.

4. Verfahren zum Erzeugen einer drahtlosen Ladeausrichtungsleitung (300) auf einem Mobiltelefon (1) nach Anspruch 3, wobei sich die Position der Anfangsleitung (30) in der Mitte des Betriebsbildschirms (3) befindet oder durch Daten bestimmt wird, die durch vorherige Verwendung der Anwendung aufgezeichnet wurden, oder eine voreingestellte Position.

5. Verfahren zum Erzeugen einer drahtlosen Ladeausrichtungsleitung (300) auf einem Mobiltelefon (1) nach Anspruch 3, wobei der Schritt des Definierens der ersten nicht aufladbaren Leitung (31) auf dem Betriebsbildschirm (3) umfasst: zuerst Bewegen des Mobiltelefons in eine erste Richtung (41) gemäß der Anzeige (341) des Betriebsbildschirms und Anhalten der Bewegung, wenn ein Anzeigesignal, das die Unterbrechung des Ladevorgangs oder den Ausfall des Ladevorgangs anzeigt, auf dem Betriebsbildschirm erscheint; Verwenden eines Fingers zum Berühren, um eine bewegliche Leitung (33) auf dem Betriebsbildschirm zu bewegen, und Anhalten der Bewegung, wenn die bewegliche Leitung mit dem entsprechenden Symbol (23) ausgerichtet ist; dann Verwenden eines Fingers zum Berühren eines Bestätigungsfeldes (35), das auf dem Betriebsbildschirm angezeigt wird, um die Anwendung zu veranlassen, die erste nicht aufladbare Leitung (31) zu erzeugen, die auf dem Betriebsbildschirm (3) erscheint

6. Verfahren zum Erzeugen einer drahtlosen Ladeausrichtungsleitung (300) auf einem Mobiltelefon (1) nach Anspruch 5, wobei der Schritt des Definierens der ersten bevorzugten Ladeleitung (36) auf dem Betriebsbildschirm umfasst: zuerst Bewegen des Mobiltelefons in eine zweite Richtung (42) gemäß der Anzeige (342) des Betriebsbildschirms, wobei die zweite Richtung entgegengesetzt zur ersten Richtung ist, und Anhalten der Bewegung, wenn ein Anzeigesignal, das eine vorbestimmte Ladeeffizienz zeigt, auf dem Betriebsbildschirm erscheint; Verwenden eines Fingers zum Berühren, um eine bewegliche Leitung (33) auf dem Betriebsbildschirm zu bewegen, und Anhalten der Bewegung, wenn die bewegliche Leitung mit dem entsprechenden Symbol (23) ausgerichtet ist; dann Verwenden eines Fingers zum Berühren eines auf dem Betriebsbildschirm angezeigten Bestätigungsfeldes (35), um die Anwendung zu veranlassen, die erste bevorzugte Ladeleitung (36) zu erzeugen, die auf dem Betriebsbildschirm (3) erscheint.

7. Verfahren zum Erzeugen einer drahtlosen Ladeausrichtungsleitung (300) auf einem Mobiltelefon (1) nach Anspruch 6, wobei der Schritt des Definierens der zweiten nicht aufladbaren Leitung (38) auf dem Betriebsbildschirm umfasst: zuerst Bewegen des Mobiltelefons in die zweite Richtung (42) gemäß der Anzeige (342) des Betriebsbildschirms, und Anhalten der Bewegung, wenn ein Anzeigesignal, das die Unterbrechung des Ladevorgangs oder den Ausfall des Ladevorgangs anzeigt, auf dem Betriebsbildschirm erscheint; Verwenden eines Fingers zum Berühren, um eine bewegliche Leitung (33) auf dem Betriebsbildschirm zu bewegen, und Anhalten der Bewegung, wenn die bewegliche Leitung mit dem entsprechenden Symbol (23) ausgerichtet ist; dann Verwenden eines Fingers zum Berühren eines Bestätigungsfeldes (35), das auf dem Betriebsbildschirm angezeigt wird, um die Anwendung zu veranlassen, die zweite nicht aufladbare Leitung (38) zu erzeugen, die auf dem Betriebsbildschirm (3) erscheint.

8. Verfahren zum Erzeugen einer drahtlosen Ladeausrichtungsleitung (300) auf einem Mobiltelefon (1) nach Anspruch 7, wobei der Schritt des Definierens der zweiten bevorzugten Ladeleitung (39) auf dem Betriebsbildschirm umfasst: zuerst Bewegen des Mobiltelefons in der ersten Richtung (41) gemäß der Anzeige (341) des Betriebsbildschirms und Anhalten der Bewegung, wenn ein Anzeigesignal, das eine vorbestimmte Ladeeffizienz zeigt, auf dem Betriebsbildschirm erscheint; Verwenden eines Fingers zum Berühren, um eine bewegliche Leitung (33) auf dem Betriebsbildschirm zu bewegen, und Anhalten der Bewegung, wenn die bewegliche Leitung mit dem entsprechenden Symbol (23) ausgerichtet ist; dann Verwenden eines Fingers zum Berühren eines Bestätigungsfeldes (35), das auf dem Betriebsbildschirm angezeigt wird, um zu veranlassen, dass die Anwendung die zweite bevorzugte Ladeleitung (39) erzeugt, die auf dem Betriebsbildschirm (3) erscheint.

9. Verfahren zum Erzeugen einer drahtlosen Ladeausrichtungsleitung (300) auf einem Mobiltelefon (1) nach Anspruch 1, wobei die Anwendung sich synchron mit einer Cloud Server Datenbank verbinden und die Cloud Server Datenbank synchron mit erhaltenen Ausrichtungsdaten des Mobiltelefons aktualisieren kann.

## Revendications

1. Procédé pour générer une ligne d'alignement de charge sans fil (300) sur un téléphone mobile (1), comprenant:
démarrer une application dans le téléphone mobile et générer un écran de fonctionnement (3), et placer le téléphone mobile sur un dispositif de charge sans fil (2), au moins un symbole correspondant (23) étant disposé sur le dispositif de charge sans fil;
**caractérisé en ce que** le dispositif de charge sans fil a deux bras de serrage (21), le au moins un symbole correspondant (23) étant disposé sur les bras de serrage (21), et le téléphone mobile étant placé entre les bras de serrage;
le procédé comprenant en outre:
déplacer le téléphone mobile selon l'indication (341) de l'écran de fonctionnement (3), et générer une première ligne non rechargeable (31) sur l'écran de fonctionnement;
déplacer le téléphone mobile selon l'indication (342) de l'écran de fonctionnement (3), et générer une première ligne de charge préférée (36) correspondant à une efficacité de charge prédéterminée sur l'écran de fonctionnement;
déplacer le téléphone mobile selon l'indication (342) de l'écran de fonctionnement (3), et générer une deuxième ligne non rechargeable (38) sur l'écran de fonctionnement, en utilisant le centre du téléphone mobile comme centre, la première ligne non rechargeable et la deuxième ligne non rechargeable étant situées sur des côtés opposés du centre;
déplacer le téléphone mobile selon l'indication (341) de l'écran de fonctionnement (3), et générer une deuxième ligne de charge préférée (39) correspondant à une efficacité de charge prédéterminée sur l'écran de fonctionnement, en utilisant le centre du téléphone mobile comme centre, la première ligne de charge préférée et la deuxième ligne de charge préférée étant situées sur des côtés opposés du centre;
l'application calculant une valeur médiane selon les positions de la première ligne non rechargeable (31), de la première ligne de charge préférée (36), de la deuxième ligne non rechargeable (38) et de la deuxième ligne de charge préférée (39), et affichant la ligne d'alignement (300) sur l'écran de fonctionnement (3) selon la valeur médiane.

2. Procédé pour générer une ligne d'alignement de charge sans fil (300) sur un téléphone mobile (1) selon la revendication 1, dans lequel l'indication de l'écran de fonctionnement se fait par au moins l'un parmi l'affichage d'une flèche (341, 342), l'affichage d'un texte, ou une invite vocale.

3. Procédé pour générer une ligne d'alignement de charge sans fil (300) sur un téléphone mobile (1) selon la revendication 1, dans lequel lorsque l'application est lancée, une ligne initiale (30) apparaît sur l'écran de fonctionnement (3) ; et pendant le placement du téléphone mobile dans le dispositif de charge sans fil, la ligne initiale (30) est alignée sur le symbole correspondant (23).

4. Procédé pour générer une ligne d'alignement de charge sans fil (300) sur un téléphone mobile (1) selon la revendication 3, dans lequel la position de la ligne initiale (30) est au milieu de l'écran de fonctionnement (3), ou déterminée par des données enregistrées en utilisant précédemment l'application, ou une position prédéfinie.

5. Procédé de génération d'une ligne d'alignement de charge sans fil (300) sur un téléphone mobile (1) selon la revendication 3, dans lequel l'étape de définition de la première ligne non chargeable (31) sur l'écran de fonctionnement (3) comprend : d'abord déplacer le téléphone mobile dans une première direction (41) selon l'indication (341) de l'écran de fonctionnement, et arrêter le déplacement lorsqu'un signal d'affichage montrant la suspension de la charge ou l'échec de la charge apparaît sur l'écran de fonctionnement ; l'utilisation d'un doigt pour toucher afin de déplacer une ligne mobile (33) sur l'écran de fonctionnement, et l'arrêt du déplacement lorsque la ligne mobile est alignée avec le symbole correspondant (23) ; puis, l'utilisation d'un doigt pour toucher une case de confirmation (35) affichée sur l'écran de fonctionnement pour amener l'application à générer la première ligne non rechargeable (31) à apparaître sur l'écran de fonctionnement (3).

6. Procédé pour générer une ligne d'alignement de charge sans fil (300) sur un téléphone mobile (1) selon la revendication 5, dans lequel l'étape de définition de la première ligne de charge préférée (36) sur l'écran de fonctionnement comprend: d'abord déplacer le téléphone mobile dans une deuxième direction (42) selon l'indication (342) de l'écran de fonctionnement, la deuxième direction étant opposée à la première direction, et arrêter le déplacement lorsqu'un signal d'affichage montrant une efficacité de charge prédéterminée apparaît sur l'écran de fonctionnement; l'utilisation d'un doigt pour toucher afin de déplacer une ligne mobile (33) sur l'écran de fonctionnement, et l'arrêt du déplacement lorsque la ligne mobile est alignée avec le symbole correspondant (23); puis, l'utilisation d'un doigt pour toucher une case de confirmation (35) affichée sur l'écran de fonctionnement pour amener l'application à générer la première ligne de charge préférée (36) à apparaître sur l'écran de fonctionnement (3).

7. Procédé de génération d'une ligne d'alignement de charge sans fil (300) sur un téléphone mobile (1) selon la revendication 6, dans lequel l'étape de définition de la deuxième ligne non chargeable (38) sur l'écran de fonctionnement comprend : d'abord déplacer le téléphone mobile dans la deuxième direction (42) selon l'indication (342) de l'écran de fonctionnement, et arrêter le déplacement lorsqu'un signal d'affichage montrant la suspension de la charge ou l'échec de la charge apparaît sur l'écran de fonctionnement ; l'utilisation d'un doigt pour toucher afin de déplacer une ligne mobile (33) sur l'écran d'opération, et l'arrêt du déplacement lorsque la ligne mobile est alignée avec le symbole correspondant (23); puis, l'utilisation d'un doigt pour toucher une case de confirmation (35) affichée sur l'écran d'opération pour amener l'application à générer la deuxième ligne non rechargeable (38) à apparaître sur l'écran d'opération (3).

8. Procédé pour générer une ligne d'alignement de charge sans fil (300) sur un téléphone mobile (1) selon la revendication 7, dans lequel l'étape de définition de la deuxième ligne de charge préférée (39) sur l'écran de fonctionnement comprend : d'abord le déplacement du téléphone mobile dans la première direction (41) selon l'indication (341) de l'écran de fonctionnement, et l'arrêt du déplacement lorsqu'un signal d'affichage montrant une efficacité de charge prédéterminée apparaît sur l'écran de fonctionnement; l'utilisation d'un doigt pour toucher afin de déplacer une ligne mobile (33) sur l'écran de fonctionnement, et l'arrêt du déplacement lorsque la ligne mobile est alignée avec le symbole correspondant (23); puis, l'utilisation d'un doigt pour toucher une case de confirmation (35) affichée sur l'écran de fonctionnement pour amener l'application à générer la deuxième ligne de charge préférée (39) à apparaître sur l'écran de fonctionnement (3).

9. Procédé pour générer une ligne d'alignement de charge sans fil (300) sur un téléphone mobile (1) selon la revendication 1, dans lequel l'application peut se connecter de manière synchrone à une base de données de serveur en nuage, et mettre à jour de manière synchrone la base de données de serveur en nuage avec les données d'alignement obtenues du téléphone mobile.
